# EUROPEAN PATENT APPLICATION

(11) **EP 2 793 091 A1**
(43) Date of publication of application: **22.10.2014**
(21) Application number: 13163938.7
(22) Date of filing: 16.04.2013
(51) Int. Cl.: G05B 19/418

(54) **Distributed control system**

(71) Applicant: Alstom Technology Ltd, 5400 Baden (CH)
(72) Inventor: Crepet, Gilles, 91790 Boissy-sous-Saint-Yon (FR)

(57) **Abstract**

A distributed control system comprising
a housing (2), at least one module (7a, 7b, 7c, 7d, 7e, 7f, 7g, 7h, 7i),
a non-galvanic communication link (9), at least one module (7a, 7b, 7c, 7d, 7e, 7f, 7g, 7h, 7i) is associated with a converter (8a, 8b, 8c, 8d, 8e, 8f, 8g, 8h, 8i), the converter (8a, 8b, 8c, 8d, 8e, 8f, 8g, 8h, 8i) is suitable to communicate over the communication link (9), the converter (8a, 8b, 8c, 8d, 8e, 8f, 8g, 8h, 8i) is suitable to condition the input for the module, so signals transmitted through the communication link (9) can be processed internally by the module, characterized in that the range of the communication link (9) is substantially limited to the size of the housing (2).

## Description

### FIELD OF THE INVENTION

The present disclosure relates to a distributed control system. More particularly, the present disclosure relates to the communication between adjacent modules or modules within a same rack unit or box of the distributed control system.

### BACKGROUND

A distributed control system typically involves the control of a device, of a manufacturing process, or power plant by monitoring its characteristics. Modern distributed control systems typically employ automated apparatus such as digital data processing to monitor a system such as a plant and automatically adjust its operational parameters.

In addition to automated apparatus, modern distributed control systems also comprise a human-machine interface. To that end, the distributed control system tracks changes of the system and displays alarms or other indicia of its status, of its health and of other characteristics. The human-machine interface then allows higher levels of control of the system as a whole. The interface allows an operator to interact with the distributed control system and to adjust the operational parameters of the system as required.

A distributed control system is typically made up of field devices and of controllers. The functions of these modules may be combined or they may overlap. Field devices include sensor-type and actuator-type devices. Sensor-type field devices measure characteristics such as pressure, temperature, or mass flow. Field devices also provide actuators such as valves and positioners that hydraulically, pneumatically, magnetically, or otherwise carry out the desired control.

Controllers generate settings for actuator-type field devices based on measurements taken by sensor-type field device. To that end, a control algorithm is implemented in the controller. Proportional, integral, and derivative (PID) control is a well-known example of a control algorithm. Neural networks and fuzzy logics are more advanced examples of control algorithms. The control algorithm maintains a system at a desired level or drives it to that level. It does so by minimizing the differences between the characteristics measured by the sensor-type field devices and a pre-defined set-point.

A distributed control system may be used, by way of non-limiting example, to achieve best performance, highest availability, and maximum reliability of a plant. In particular, a distributed control system may be employed to improve on generation efficiency for a power plant. Other uses of distributed control systems comprise process control in manufacturing, power grids, as well as residential and institutional settings where many environmental characteristics are maintained.

The field devices, the controllers and the human-machine interface communicate over either galvanically coupled links or non-galvanic links. Galvanically coupled links are typically made of electric cables that run from one module to another. Communication is effected by transferring electric charges through the cable. Non-galvanic links include, but are not limited to, optical links based on infra-red light or lasers, electrical links such as magnetic or electric waves, acoustic links such as ultra-sound, electromechanical such as piezo-electric. Non-galvanic do not rely on direct transfer of electric charges through cables (can be sound, transformers, capacitors, light as with opto-couplers). For this reason, air or other atmosphere, non-conductive barriers/ducts/guides/pipes,fiber optics or optic guides or sound guides are considered non-galvanic insulation within the context of this disclosure.

The communication links between the field devices, the controllers and the human-machine interface have to meet a number of conflicting technical requirements: In perturbated environments, any the number of galvanically coupled links between communicating modules is minimized. A transient electric overvoltage could otherwise be transferred from one module to a second module through a cable. The transferred transient overvoltage may then destroy the second module or perturbate it or impact its behavior, which is notably not accepted in the frame of safety modules.

Mechanically harsh environments or ease of maintenance by module hotswap exchange may also require minimization of the number of mechanical connections between modules. This requirement applies, in particular, to communication links involving mechanical connections. A typical example of such an environment would be a distributed control system employed in a manufacturing process. Mechanical links such as coaxial leads may, for example, get damaged by fork-lifts.

Long-range non-galvanic links between the modules of a distributed control systems create potential for intrusion. If the non-galvanic link was, for example, established through a **w**ireless **l**ocal **a**rea **n**etwork (WLAN), an attacker could try and compromise a system by using a standard portable computer. An attack against the distributed control system would then be feasible from anywhere within range of the WLAN. The latter could actually be several hundred meters. The severity of this attack is further exacerbated, since many of the applications of distributed control systems such as (power) plants are essential elements of (electric) infrastructure. Consequently, there is a need to rely on preferably short-range non-galvanic links in distributed control systems.

In addition, it will be impossible for an attacker to intercept a communication link when there is no communication because the link is not active (idle) or dematerialized or localized (infrared, ultra sound, **l**ight-**f**idelity Li-Fi,...). Communication links between field devices and between controllers shall thus be idle whenever possible. It is thus an object of the present disclosure to make communication between the modules of a distributed control system as discreet as possible.

Cyber-security these days poses a real threat to electrical infrastructure such as (power) plants and power grids. That is why a distributed control system shall implement established methods of encryption as well as proprietary protocols and encryption. The use of proprietary protocols and encryption achieves security through obscurity. In other words, an attacker may not be able to intercept the communication between field devices and between controllers because the protocols are not known to him.

Due to technical or financial constraints a forced outage of a power plant after failure of a module of a distributed control system may not be viable. It is thus common for distributed control systems to implement technical redundancy by employing a plurality of field devices and of controllers. Typically, an individual field device or an individual controller may fail or be taken out of service without compromising the operation of the system as a whole. Consequently, the communication link for monitoring, switchover orders and/or interlocking, data exchanges between the modules of a distributed control system must support parallelizing and/or switching between two technically redundant modules in case of failure of one module.

A particular situation occurs when a field device or a controller requires replacement while the system is in-service. A shutdown of an entire (power) plant or of a manufacturing process together with the distribution control system may in this situation be unacceptable. Consequently, there is a need to avoid shutdown of the distributed control system whenever one of its modules requires replacement.

The present disclosure is oriented towards providing the aforementioned needs and towards overcoming the aforementioned difficulties.

### SUMMARY OF THE INVENTION

The present disclosure is about improved distributed control systems. In order to arrive at a distributed control system which is inherently secure and implements redundancy, a group of controllers or of field devices is arranged in a rack unit, preferably in a 19-inch or in a 23-inch rack unit. The modules inside this rack communicate via a non-galvanic link, so there is no galvanic coupling through the communication link, there will also be mechanical independence between the modules.

A short-range non-galvanic link is employed in order to additionally secure the distributed control system. The distance covered by the short-range link is typically limited to the physical distances between the controllers arranged inside a rack unit. That is, controllers can reliably send and receive signals within a rack unit.

The short-range non-galvanic link may be established, by way of non-limiting example, via insulated medium as air or other atmosphere/barriers/ducts/pipes/guides/optic fiber through an infra-red, laser or Li-Fi, solution, , through ultrasound, or through short-range radio-frequency communication such as **u**ltra-**w**ide **b**and (UWB), through transformer or capacitive coupling or through electro-mechanic coupling.

A non-galvanic link may not transfer status information while in idle mode. It then becomes impossible to eavesdrop or intercept the non-galvanic communication between a pair of modules. Security of the distributed control system is further enhanced by switching the non-galvanic link to idle mode whenever possible.

Even if an eavesdropper managed to intercept the communication between two modules, the potential use of encryption or proprietary protocol would hinder him from obtaining plain-text (decrypted) data. Encryption is implemented, by way of non-limiting example, through established encryption algorithms such as **a**dvanced **e**ncryption **s**tandard (AES), **d**ata **e**ncryption **s**tandard (DES), **R**on's **c**ode **4** (RC4), or blowfish. The non-galvanic link may also rely on proprietary protocols with or without encryption in order to make it even harder to intercept the communication between two modules.

It is thus envisaged to combine the aforementioned techniques to further enhance the security of the distributed control system.

Technical redundancy is achieved through status, data or inter-locks exchange between modules. The modules disclosed herein are capable of exchanging status information as well as diagnostic data between each other. They are also capable of synchronization. Synchronization as well as exchange of status information and diagnostic data is achieved through the non-galvanic link. A pair of analogue modules may, for example, each comprise a monitoring unit and an inverter for optical communication. The (inverters of the analog) modules would then exchange data through an optical link.

This type of link is particularly useful when one module needs replacement while the distributed control system in-service. Due to the exchange of status information between a pair of modules, two modules can have identical status. In case one of the two modules fails, the other module can take on the role of the first module and replace its function within the distributed control system. That way, the failed module can be replaced without impairing the operation of the distributed control system.

It will also be possible to add a module to an existing distributed control system that synchronizes itself with a module that is already part of the system. Further, it is possible to unplug a failed module and replace it with a new module. The new module will then synchronize itself with an already existing module and become part of the distributed control system. The non-galvanic link can also support exchange of data between modules. Optic solutions (notably Li-Fi with recently improved bandwidth) could even allow implementing an optic bus between several modules of a rack for data exchange (for example between a CPU and I/O modules). The invention also covers redundant or not redundant bidirectional bus (address + data + control signals including synchronization signals). It also covers serial bus types (one bidirectional non-galvanic link) and/or parallel bus types (with several bidirectional non-galvanic links).

### BRIEF DESCRIPTION OF DRAWINGS

The foregoing objects and many of the attendant advantages of this invention will become more readily appreciated as the same becomes better understood by reference to the following detailed description when taken in conjunction with the accompanying drawings, wherein:
Fig. 1 provides a three-dimensional front view of a rack unit 1.
Fig 2 is a schematic with details of the communication between adjacent modules m and n.
Fig 3 schematically shows a group of nine IO modules being synchronized by a common source. This source may be technically redundant.
Fig 4 schematically shows ten modules 10a, 10b, 10c, 10d, 10e, 10f, 10g, 10h, 10i, 10j to be synchronized and/or to exchange data.

### DETAILED DESCRIPTION OF THE INVENTION

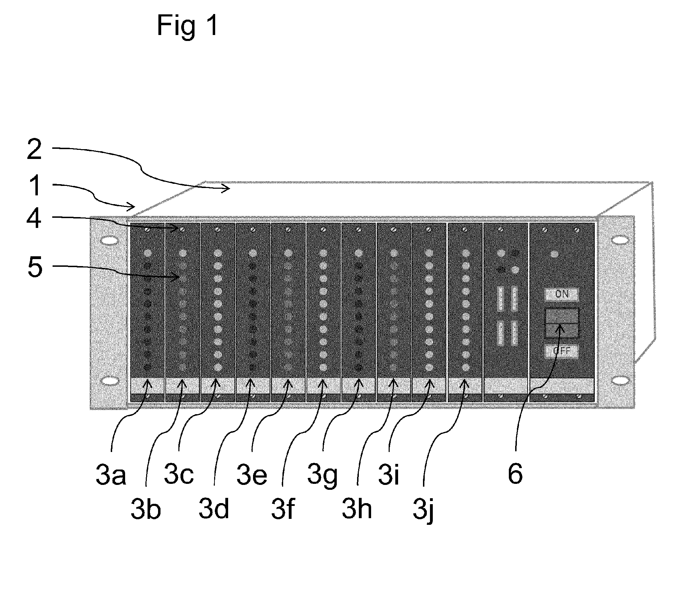

Fig. 1 provides a three-dimensional front view of a rack unit 1. In a preferred embodiment, the rack unit 1 would be a 19-inch or a 23-inch rack unit. These units are 48.26 cm or 58.42 cm wide, respectively.

The rack 1 provides a housing 2. The housing 2 accommodates a plurality of modules 3a, 3b, 3bc, 3d, 3e, 3f, 3g, 3h, 3i, 3j. The modules 3a, 3b, 3bc, 3d, 3e, 3f, 3g, 3h, 3i, 3j are arranged side-by-side. Each module can be fastened by means of a mounting hole 4 and a screw. The housing 2 may as well provide rails along which the modules 3a, 3b, 3bc, 3d, 3e, 3f, 3g, 3h, 3i, 3j can slide into the housing 2.

Each module 3a, 3b, 3bc, 3d, 3e, 3f, 3g, 3h, 3i, 3j inside the housing 2 may provide one or several visible indications 5 to share information with an operator. In a preferred embodiment, the visible indications are **l**ight-**e**mitting **d**iodes (LEDs).

The rack unit 1 may also comprise a power switch 6. The power switch 6 connects or disconnects the mains supply for the modules 3a, 3b, 3bc, 3d, 3e, 3f, 3g, 3h, 3i, 3j of the rack unit 1. Preferably, an indication as to the state (on or off) of the power switch 6 is provided as well.

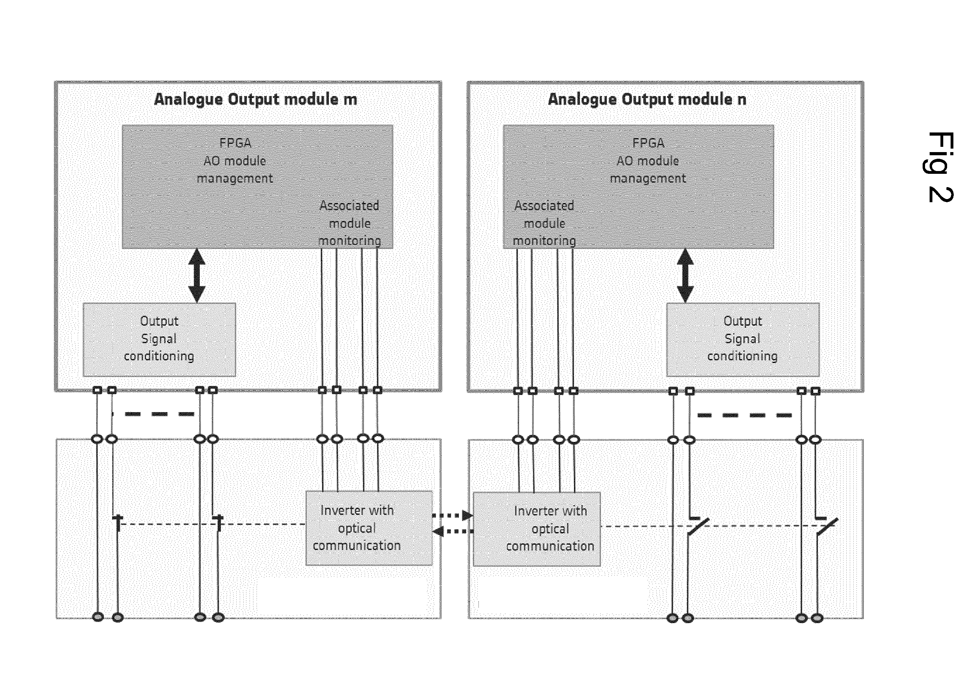

Fig 2 is a schematic with details of the communication between adjacent modules m and n. Fig 2 shows two analogue modules, each module comprising a plurality of units. The modules m and n shown on Fig 2 each comprise the units labeled AO module management, labeled FPGA (field-programmable gate array), labeled Output Signal Conditioning, labeled Associated Module Monitoring, and labeled Inverter with optical communication. AO stands for Analogue Output and it is an example and any kind of module can use the invention to implement redundancy

A **f**ield-**p**rogrammable **g**ate **a**rray (FPGA). The FPGA would typically process data and forward instructions to an actuator-type field device. These instructions will, however, need to be conditioned, so the instructions can be transmitted to the actuator-type field device. Fig 2 shows each module comprises a unit responsible for Output Signal Conditioning. The Output Signal Conditioning carries out the step of converting the output from the FPGA into a format that allows transmission to the actuator-type field device.

The unit labeled Associated Module Monitoring shown on Fig 2 tracks changes of the module and gathers indicia of its status, of its health and of other characteristics. Each of the two modules shown on Fig 2 comprises a unit labeled Associated Module Monitoring and a unit labeled Inverter or outputs switch with optical communication. The latter units condition the digital or analogue signals from the unit labeled Associated Module Monitoring by converting them into optical signals. The Analogue Output Modules m and n communicate with each other through their units labeled Inverter with optical communication. To that end, the two units labeled Inverter with optical communication need to be connected to each other. This connection is indicated on Fig 2 by dashed arrows. Preferably, a non-galvanic link is used to connect the two units labeled Inverter with optical communication. Since the Analogue Output Modules m and n are arranged next to each other, the non-galvanic link could and actually should be short-range. The connection is preferably bidirectional. Two dashed arrows indicating a bidirectional connection are shown on Fig 2.

Since the Analogue Output Modules m and n communicate with each other, they can exchange information about status as well as diagnostic data. The Analogue Output Modules will then have identical status. In case of failure of one of the Analogue Output Modules m, the other Analogue Output Module n will operate as if it was the Analogue Output Module m. In other words, the technical redundancy is achieved through the use of a short-range non-galvanic link.

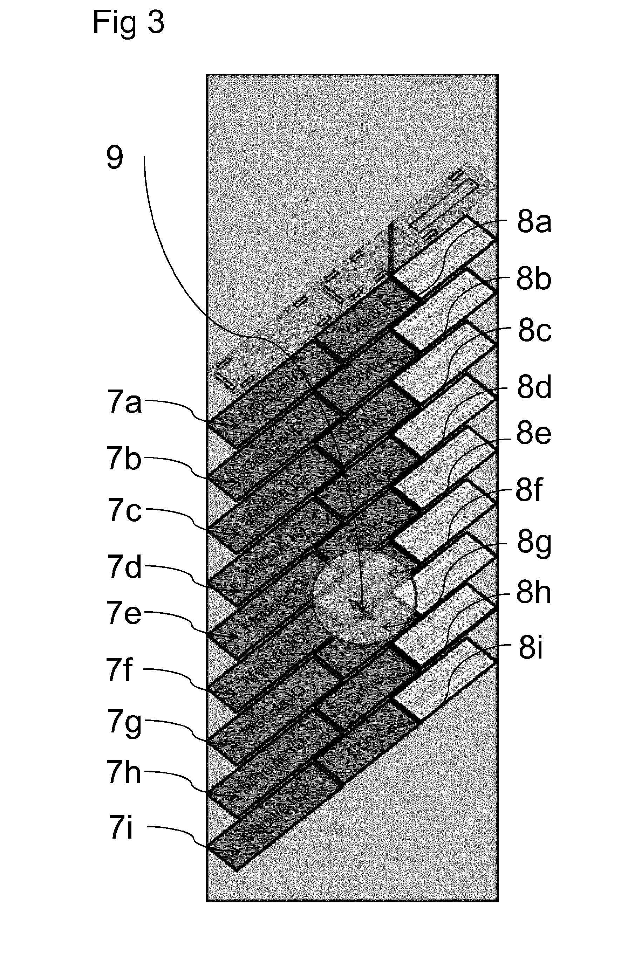

Fig 3 schematically shows a group of nine IO modules (input-output modules) 7a, 7b, 7c, 7d, 7e, 7f, 7g, 7h, 7i. Each IO module of the stack is associated with a converter 8a, 8b, 8c, 8d, 8e, 8f, 8g, 8h, 8i. The Analogue Output Modules and the Inverters with optical communication of Fig 2 are special examples of the IO modules and of the converters of Fig 3. Adjacent IO modules may communicate with each other through short-range non-galvanic links. An arrow 9 indicates this type of link between the converters 8f and 8g. This modules implementation is an example only and the invention can apply to all types of modules associations and rack units.

The short-range non-galvanic link between modules can also be useful for interlocking. The doors of an elevator, for instance, require interlocking, so a door will not open unless the elevator is not on the same floor. An interlock module would in this case read the position of the elevator from a sensor-type field device. This interlock module would generate an interlock signal to be sent to the control modules for the elevator doors on each floor. The interlock module would send this signal to all control modules for elevator doors that must not open. The communication between the interlock module and the modules for the elevator doors can be established through a short-range non-galvanic link. Ideally a bidirectional link is used, so the control modules for the elevator doors periodically check if the interlock module is alive.

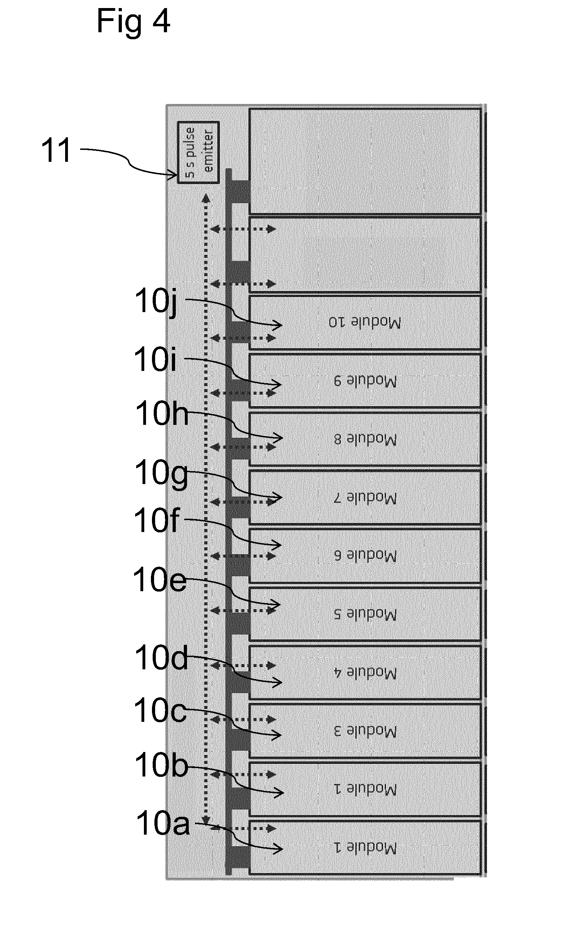

Fig 4 schematically shows ten modules 10a, 10b, 10c, 10d, 10e, 10f, 10g, 10h, 10i, 10j to be synchronized. Each module comprises a converter unit, even though no converter units are shown on Fig 4. Fig 4 also shows a pulse emitter 11. The pulse emitter is preferably arranged together with the modules 10a, 10b, 10c, 10d, 10e, 10f, 10g, 10h, 10i, 10j in the same housing 2 of the same rack unit 1. The pulse emitter 11 also would typically employ the same short-range non-galvanic link to emit, by way of non-limiting example, radio-frequency, optical or acoustic pulses. Typically the delay between subsequent pulses would be five seconds.

The signal path for the pulses is indicated by the dashed arrows in Fig 4. The converter units of the modules 10a, 10b, 10c, 10d, 10e, 10f, 10g, 10h, 10i, 10j receive these pulses and use them to synchronize their internal clocks. Accordingly, the internal clock of each module is synchronized to the same source. Synchronization between the modules through a short-range non-galvanic link can be especially useful when any other bus between the modules does not implement synchronization or does not provide free signals paths for synchronization.

The same scheme can also apply to exchange of information and can be the basis for an optic bidirectional bus between modules and a CPU for example (based for example on Li-Fi). The signal path can be materialized by insulated medium such as air or other atmosphere/barriers/ducts/pipes/optic or sound guides/optic fiber. The signal path can be unidirectional or bidirectional, serial and/or parallel, simplex or redundant

Although the present invention has been fully described in connection with preferred embodiments, it is evident that modifications may be introduced within the scope thereof, not considering the application to be limited by these embodiments, but by the contents of the following claims.

### REFERENCE NUMBERS

1 rack unit
1 housing
3a, 3b, 3bc, 3d, 3e, 3f, 3g, 3h, 3i, 3j modules
4 mounting hole
5 visible indication
6 power switch
7a, 7b, 7c, 7d, 7e, 7f, 7g, 7h, 7i input-output modules
8a, 8b, 8c, 8d, 8e, 8f, 8g, 8h, 8i converters
9 non-galvanic link between two converters
10a, 10b, 10c, 10d, 10e, 10f, 10g, 10h, 10i, 10j modules
11 pulse emitter

## Claims

1. A distributed control system comprising
a housing (2),
at least one module (7a, 7b, 7c, 7d, 7e, 7f, 7g, 7h, 7i) located in the housing (2),
at least one module is associated with a converter (8a, 8b, 8c, 8d, 8e, 8f, 8g, 8h, 8i),
the converter (8a, 8b, 8c, 8d, 8e, 8f, 8g, 8h, 8i) is configured to communicate signals over a non-galvanic communication link,
wherein the converter (8a, 8b, 8c, 8d, 8e, 8f, 8g, 8h, 8i) is configured to condition module input to enable internal processing of the signals by the module (7a, 7b, 7c, 7d, 7e, 7f, 7g, 7h, 7i),
**characterized in that**
the range of the non-galvanic communication link is substantially limited to the size of the housing (2).

2. The distributed control system according to claim 1,
wherein the housing (2) is provided by a rack unit (1).

3. The distributed control system according to claim 2,
wherein the housing (2) is provided by a 23-inch rack unit (1).

4. The distributed control system according to claim 2,
wherein the housing (2) is provided by a 19-inch rack unit (1).

5. The distributed control system according to any of the claims 1 to 4,
wherein at least one converter is configured to condition the output of the module to enable transmission of the signals generated by the module through the non-galvanic communication link.

6. The distributed control system according to any of the claims 1 to 5,
wherein the communication link is established through (for example among many solutions) an infra-red connection.

7. The distributed control system according to any of the claims 1 to 5,
wherein the communication link is established through optics (fiber, infra-red, Li-Fi...).

8. The distributed control system according to any of the claims 1 to 5,
wherein the communication link is established through ultrasound.

9. The distributed control system according to any of the claims 1 to 5,
wherein the communication link is established through short-range radio-frequency communication.

10. The distributed control system according to claim 9,
wherein the communication link is established through ultra-wide-band communication.

11. The distributed control system according to any of the claims 1 to 10,
wherein the communication through the communication link is encrypted.

12. The distributed control system according to any of the claims 1 to 11,
wherein the communication link is configured to switch to idle mode.

13. The distributed control system according to any of the claims 1 to 12 further comprises a pulse emitter (11) configured to transmit pulses of limited duration over the non-galvanic communication link and/or bidirectional data

14. The distributed control system according to claim 13 further comprises a pulse emitter (11) configured to emit synchronization pulses (for example every five seconds).

15. Method for communication between a first (8f) and a second (8g) module inside a housing (2) of a distributed control system,
through a non-galvanic communication link (9),
the method comprising
conditioning of the signal of the first module (8f),
transmitting the signals through the communication link (9),
conditioning of the signal for the second module (8g),
**characterized in that**
transmission is effected over a communication link (9) with a range that is substantially limited to the size of the housing (2).
